# NEUE EUROPÄISCHE PATENTSCHRIFT

(11) **EP 2 963 380 B2**
(45) Veröffentlichungstag und Bekanntmachung des Hinweises auf die Entscheidung über den Einspruch: **25.06.2025**
(45) Hinweis auf die Patenterteilung: 08.01.2020
(21) Anmeldenummer: 14175829.2
(22) Anmeldetag: 04.07.2014
(51) Int. Cl.: G01N 21/952, B29C 65/00, B29C 65/82, B29C 65/02, G01B 11/24

(54) **Berührungsloses Überprüfen einer Stumpfschweissung**
Contactless inspection for butt welding
Contrôle sans contact d'une soudure bout à bout

(43) Veröffentlichungstag der Anmeldung: 06.01.2016
(73) Patentinhaber: Georg Fischer Rohrleitungssysteme AG, 8201 Schaffhausen (CH)
(72) Erfinder: Reiz, Robert, 79780 Stühlingen (DE); Brossi, Steven, 8152 Glattpark (Opfikon) (CH); Marty, Florentin, 8064 Zürich (CH)
(74) Vertreter: Dietz, Christopher Friedrich

(56) Entgegenhaltungen:
- EP-A1- 0 959 344
- WO-A1-2008/125102
- WO-A1-2011/023960
- WO-A1-2013/064838
- WO-A1-2013/076541
- WO-A1-2014/063153
- DE-B3- 102012 007 563
- DE-U1- 202014 100 284
- US-A- 6 084 203
- US-A1- 2002 084 260
- US-A1- 2004 179 206
- US-A1- 2007 119 829
- US-A1- 2010 314 362
- ANONYMOUS: "DVS 2207 Teil 1 - Schweißen von thermoplastischen Kunststoffen Heizelementschweißen von Rohren, Rohrleitungsteilen und Tafeln aus PE-HD", DVS RICHTLINIE, August 1995 (1995-08-01), pages 184 - 195, XP055742860
- ANDREA SPITZER: "Verwendung von Spiegeln zur vollständigen photogrammetrischen Oberflächenrekonstruktion von schwer zugänglichen Objekten", DIPLOMARBEIT, September 2009 (2009-09-01), pages ii-iv, 1 - 62, XP055742867, Retrieved from the Internet <URL:https://publik.tuwien.ac.at/files/PubDat_178059.pdf>

## Beschreibung

Die Erfindung betrifft eine Vorrichtung und ein Verfahren zur berührungslosen Überprüfung einer Stumpfschweissung von Kunststoffrohren und Fittingen, wobei die Vorrichtung eine Trägervorrichtung, eine Beleuchtung und mindestens einen Sensor aufweist, wobei die Rohrenden mittels bekanntem Stumpfschweissverfahren verschweisst werden und eine berührungslose Überprüfung der Schweissnaht sowie optionale Prüfung der Rohrenden bzw. Fittingenden vor der Schweissung mittels Sensor durchgeführt wird.

Eine Überprüfung einer Stumpfschweissung dient der Qualitätssicherung der Schweissung. Es spielt keine Rolle mit welchem Verfahren die Rohre bzw. Fittings stumpfgeschweisst wurden, sei es mittel berührungslosem IR-Schweissverfahren, mittels des klassischen Stumpfschweissverfahrens durch berühren des Heizspiegels oder eines anderen Verfahrens. Entsprechend den zu verschweissenden Rohren bzw. Fittings, das heisst, ihren Abmassen, deren Kunststoff, der Schweisstechnologie die angewandt wird, usw. hat eine Schweissnaht eine gewisse Form bzw. Grösse aufzuweisen, die optisch überprüfbar ist. Entsprechend dazu existieren Richtlinien bzw. Normen, welche genau definieren wie eine Naht aussehen muss bzw. wie die zulässigen Abmasse in Bezug auf die Rohr- bzw. Fitting- und Schweisseigenschaften sein müssen, damit sie den Anforderungen entspricht. Bisher wurde meist eine manuelle optische Beurteilung durch eine zuständige Fachperson durchgeführt, die anhand der ihr bekannten Normen und Richtlinien die entstandene Schweissnaht vergleicht und beurteilt.

Nachteilig hierbei ist, dass Beurteilungen durch eine Fachperson sehr zeitintensiv und somit sehr teuer sind. Zudem ist eine solche Beurteilung auch nicht konstant gleich, da der menschliche Faktor eine wesentliche Rolle spielt und die Überprüfung nicht immer durch dieselbe Fachperson stattfindet.

Die JP 2000289115A offenbart eine Prüfung einer Schweissung von Kunststoffrohren mittels eines Ultraschallsensors, wodurch auch eine Aussage bezüglich der Verschmelzung der Rohrwandung im Inneren, die nicht sichtbar ist, erzielt werden kann.

Nachteilig an dieser Prüfung ist der hohe Aufwand da eine derartige Prüfung sehr zeitintensiv ist, da unteranderem die Schweissung vollständig erkaltet sein muss bevor eine solche Prüfung stattfinden kann, was für die Installation einer Rohrleitung mit diversen Schweissnähten nicht ideal ist.

US 2002/084260 A1, US 2004/179206 A1, DE 10 2012 007563 B3, DE 20 2014 100284 U1, US 2007/119829 A1, WO 2014/063153 A1, US 2010/314362 A1 und US 6 084 203 A offenbaren Vorrichtungen zur berührungslosen Überprüfung von Schweissungen. Es ist Aufgabe der Erfindung eine Vorrichtung und ein damit verbundenes Verfahren vorzuschlagen, welches eine zerstörungsfreie bzw. berührungslose, konstante Qualitätsüberprüfung der Schweissung bei stumpfgeschweissten Kunststoffrohren ermöglicht, ohne dass ein wirtschaftlicher Nachteil durch einen höheren Zeitaufwand entsteht.

Diese Aufgabe wird erfindungsgemäss durch die Merkmalskombination des Anspruchs 1 bzw. des Anspruchs 7 gelöst. Vorteilhafte Weiterbildungen der Erfindung sind Gegenstand der abhängigen Ansprüche.

Die erfindungsgemässe Vorrichtung enthält eine Trägervorrichtung, wobei dieses entsprechend der Anwendung der Vorrichtung bzw. ihrem Einsatzgebiet ausgelegt und gestaltet ist, wodurch die erfindungsgemässe Vorrichtung als autonome Prüfvorrichtung hergestellt werden kann oder aber auch als nachrüstbares Modul für eine existierende Stumpfschweissmaschine ausgebildet sein kann. Selbstverständlich kann die erfindungsgemässe Vorrichtung auch derart ausgebildet sein, dass sie bereits fest an einer Stumpfschweissmaschine integriert ist. Entsprechend der Anwendung ist auch eine Bedieneinheit vorzusehen oder kann darauf verzichtet werden, da ev. die Bedieneinheit der Schweissmaschine genutzt werden kann.

Zudem weist die Vorrichtung eine Beleuchtung auf um die Schweissnaht bzw. die Rohrenden während der Überprüfung bzw. der Aufnahmen mittels Sensor zu beleuchten, damit die Konturen der Schweissnaht bzw. Schweissraupe wie auch der Rohrenden vor dem Schweissprozess klar erkennbar sind.

Der Sensor bzw. die Digitalkamera macht Aufnahmen der Verschweissung bzw. der Schweissnaht sowie vor der Verschweissung der zu verschweissenden Rohrenden.

Als elektronischer lichtempfindlicher Sensor kann ein CCD-Sensor, CMOS-Sensor oder ein anderer aus dem Stand der Technik bekannter elektronischer lichtempfindlicher Sensoren eingebaut werden, der eine kompakte Bauweise aufweist. Selbstverständlich kann auch eine Digitalkamera eingesetzt werden, da diese meist einen solchen Sensor beinhalten. Zudem sind die aus dem Stand der Technik bekannten Digitalkameras so klein, dass sie problemlos für die vorliegende Erfindung eingesetzt werden können. Die Aufnahmen der Schweissnaht bzw. der Rohrenden kann als Film bzw. kontinuierlich ablaufen oder es können auch einzelne Bildaufnahmen getätigt werden, die einzelnen getätigten Bildaufnahmen während einer Überprüfung einer Schweissnaht sind individuell wählbar. Der Sensor bzw. die Digitalkamera ist bewegbar bzw. beweglich am Sensorträger angeordnet bzw. kann entsprechend ausgerichtet werden, falls es nötig ist.

Als bevorzugte Ausführungsform weist die erfindungsgemässe Vorrichtung einen Sensorträger auf. Der Sensor ist vorzugsweise am Sensorträger angeordnet und der Sensorträger wiederum an der Trägervorrichtung.

Vorteilhaft ist es, wenn der Sensorträger beweglich bzw. drehbar an der Trägervorrichtung angeordnet ist, dadurch ist der Sensorträger auf der Trägervorrichtung um eine Achse rotierbar, wobei die Trägervorrichtung eine feste Basis bildet.

Die Erfindung zeichnet sich dadurch aus, dass sich der Sensorträger 360° um das Rohr bzw. die Schweissung rotieren lässt. Dadurch bewegt sich der Sensor der am Sensorträger angeordnet ist ebenfalls um das Rohr mit und kann die komplette Schweissnaht bzw. die Rohrenden vor der Schweissung aufnehmen bzw. überprüfen.

Der Sensorträger weist vorzugsweise eine C-Form auf. Diese ermöglicht ein einfaches Positionieren des Sensorträgers um den Rohrumfang indem der C-förmige Sensorträger über den Rohrumfang gefahren wird, da die Öffnung der C-Form derart gross ist, dass der grösste Rohrdurchmesser, der mit der erfindungsgemässen Vorrichtung überprüft werden kann durch die Öffnung der C-Form hindurch geschoben werden kann bzw. der Sensorträger über das Rohr geschoben werden kann. Die zu verschweissenden Rohrenden werden dann konzentrisch vom Sensorträger umgeben. Diese Form des Sensorträgers ermöglicht dem Sensorträger und somit auch dem Sensor das 360° umkreisen des Rohres bzw. der Schweissnaht. Vorzugsweise ist der Sensor derart am Sensorträger angeordnet, dass der Blickwinkel bzw. das Blickfeld des Sensors es ermöglicht unterschiedliche Rohrdimensionen mit derselben erfindungsgemässen Vorrichtung zu erfassen und zu überprüfen ohne einen Umbau oder eine Einstellung der Vorrichtung vornehmen zu müssen. Wie bereits erwähnt, ist der Sensor vorzugsweise beweglich am Sensorträger angeordnet, vorzugsweise schwenkbar, wodurch eine Feineinstellung des Sensors möglich ist.

Der Sensor ist tangential auf den Rohrumfang ausgerichtet, bewährter Weise derart, dass wie zuvor bereits erwähnt, möglichst viele Dimensionen der Rohre mit einer Vorrichtung bzw. einer Sensoreinstellung erfasst werden können. Es ist zudem vorteilhaft, wenn die Beleuchtung ebenfalls in einem definierten Abstand zum Sensor am Sensorträger angeordnet ist und sich ebenfalls um das Rohr bzw. Schweissnaht mitbewegt. Die Erfindung sieht vor, dass die Beleuchtung derart am Sensorträger angeordnet ist, dass sie ein Gegenlicht für den Sensor bildet. Zu beachten ist bei der bevorzugten Ausführungsform bei der die Beleuchtung als Gegenlicht eingesetzt wird, dass auch hier die unterschiedlichen Rohrdurchmesser, für welche die Vorrichtung anwendbar ist, abdeckbar sind. Das heisst, dass sie ein Gegenlicht für den Sensor beim kleinsten wie auch beim grössten Durchmesser, der auf der Vorrichtung überprüfbar ist, bildet. Die Beleuchtung ist deshalb als Licht-Screen ausgebildet, das heisst, die Beleuchtung erstreckt sich über einen bestimmten Bereich. Die am Sensorträger angeordnete Beleuchtung, wobei der Sensorträger vorzugsweise eine C-Form aufweist, erstreckt sich an der C-Form über eine bestimmte Länge, so dass jegliche Rohrdurchmesser entsprechend gut durch den Licht-Screen beleuchtet werden. Vornehmlich kann der Licht-Screen abschnittsweise an- bzw. ausgeschaltet werden, damit jeweils nur der Abschnitt des Licht-Screens leuchtet der das optimale Gegenlicht für den Sensor bildet. Bspw. können zur Beleuchtung LEDs eingesetzt werden, die entlang des Sensorträgers derart angeordnet sind, dass sie einen Licht-Screen bilden und abschnittsweise an- oder ausgeschaltet werden können.

Eine bevorzugte Ausführungsform besteht darin, dass die erfindungsgemässe Vorrichtung einen Spiegel aufweist, wobei der Spiegel vorzugsweise am Sensorträger angeordnet ist. Es ist Vorteilhaft, wenn der Spiegel beweglich am Sensorträger angeordnet ist, das ermöglicht eine Feinausrichtung des Spiegels. Der Spiegel dient dazu, den optischen Weg zwischen Sensor und der aufzunehmenden Schweissnaht zu vergrössern. Zudem wird der Blickwinkel zwischen Sensor und der Schweissnaht verändert. Der Sensor ist in dieser Ausführungsform der erfindungsgemässen Vorrichtung nicht direkt tangential auf den Rohrumfang gerichtet sondern wird über einen Spiegel indirekt tangential auf den Rohrleitungsumfang gerichtet. Es hat sich als Vorteilhaft gezeigt, dass der Spiegel und/oder der Sensors beweglich am Sensorträger angeordnet sind, damit eine Feineinstellung vorgenommen werden kann. Die Beleuchtung ist derart angeordnet, dass ein Gegenlicht gebildet wird, das heisst, das Gegenlicht strahlt tangential an den Rohrumfang und direkt in den Spiegel hinein, welcher das Licht an den Sensor umleitet. Dadurch bleibt die Distanz zwischen Gegenlicht und Schweissnaht, die tangential beleuchtet wird, gleich wie ohne Spiegel aber die Distanz zwischen Sensor bzw. der Digitalkamera und der Schweissnaht bzw. dem Rohrumfang an der Stelle an der die Aufnahme getätigt wird, vergrössert sich im Gegensatz zur Anordnung ohne Spiegel. Dadurch vergrössert sich die wahrgenommene Breite des Gegenlichts und ermöglicht eine Beleuchtung der kompletten Schweissnaht bzw. eine Abdeckung der ganzen Breite der Schweissraupe mittels des Gegenlichts wodurch die Schweissnaht komplett von hinten beleuchtet ist, ausgehend davon, dass der Abstand des Gegenlichts zur Schweissnaht konstant bleibt. Das wiederum dient der klaren Erkennung und Erfassung der Kontur der Schweissnaht bzw. der Schweissraupe während den Aufnahmen.

Eine nicht erfindungsgemässe Vorrichtung besteht darin, dass die Beleuchtung als Auflicht am Sensorträger angeordnet ist sowie der Sensor bzw. die Digitalkamera senkrecht bzw. annähernd senkrecht auf den Aussendurchmesser der Rohrleitung bzw. der Schweissnaht gerichtet ist. Der Sensor ist deshalb annähern senkrecht ausgerichtet, damit eine Reflektionen der Beleuchtung an der Schweissnaht vermieden werden kann, wodurch die Aufnahmen klarer ausfallen. Durch diese Anordnung des Sensors und der Beleuchtung kann die Oberflächenbeschaffenheit der zu überprüfenden Stelle ermittelt werden. Wobei die Ausführung des tangentialen bzw. indirekt tangentialen Sensors mit dem Gegenlicht und der senkrecht auf den Umfang gerichtete Sensor mit dem Auflicht kombiniert wie auch separat am Sensorträger angeordnet sein können

Das erfindungsgemässe Verfahren zur berührungslosen Überprüfung einer Stumpfschweissung von Kunststoffrohren zeichnet sich durch folgende Schritte aus: Die zu verschweissenden Rohrenden werden vorzugsweise mittels Rohrklemmen auf der Stumpfschweissmaschine befestigt, so dass sich die zwei zu verschweissenden Stirnseiten einander gegenüberliegen. Daraufhin werden die Rohrenden gehobelt damit saubere und plane Stirnseiten vorliegen und so für die Schweissung vorbereitet sind.

Vorzugsweise werden bereits die zu verschweissenden Rohrenden berührungslos überprüft, sobald sie in den Rohrklemmen bspw. auf der Stumpfschweissmaschine befestigt und gehobelt sind. Zum Beispiel können die Aussendurchmesser der zu verschweissenden Rohrenden sowie auch ihre Ovalität und ihr gegenseitiger Versatz zueinander überprüft und eventuell noch korrigiert werden. Oder zumindest können die Rohre bzw. ihre Fehler dadurch frühzeitig erkannt und aussortiert bzw. ersetzt werden. Zudem besteht die Möglichkeit bereits zu diesem Zeitpunkt mittels des erfindungsgemässen Verfahrens zu erkennen ob die Oberfläche der zu verschweissenden Rohrenden genügend sauber und glatt ist. Weitere Überprüfungen und Erkennungen wie Materialerkennung, Farberkennung, Parallelität der Rohre, usw. sind durch das erfindungsgemässe Verfahren ebenso vorstellbar.

Anschliessend kann die Verschweissung durchgeführt werden, wobei die zuvor durchgeführte berührungslose Überprüfung der Rohrenden kein Muss im Verfahren zur Überprüfung der Schweissnaht darstellt. Zur Schweissung kann jegliches aus dem Stand der Technik bekanntes Verfahren angewandt werden wie bspw. eine IR-Schweissung, eine Stumpfschweissung mittels Berührung am Heizspiegel, usw.. Anschliessend erfolgt die berührungslose Überprüfung der Schweissnaht bzw. der Schweissraupe. Der grosse Vorteil hierbei besteht darin, dass die Überprüfung, da sie berührungslos ist, bereits während des Abkühlvorgangs erfolgen kann, wodurch ein zusätzlicher Zeitaufwand für eine nachträgliche Überprüfung nach dem Abkühlen vermieden werden kann, was ein rasches und zügiges Verlegen einer Rohrleitung ermöglicht. Die berührungslose Überprüfung wird mittels eines elektronischen lichtempfindlichen Sensors vorzugsweise einer Digitalkamera durchgeführt, sowohl zur Überprüfung der Schweissnaht wie auch dem optionalen Vorgang der Überprüfung der Rohrenden. Selbstverständlich sind die möglichen Ausführungsformen, wie zuvor in Bezug auf die Vorrichtung ausgeführt, auch auf das Verfahren anwendbar. Der Sensor erfasst die Kontur der Schweissnaht bzw. Schweissraupe, wie Breite, Form, usw. wodurch auch die Querschnittsfläche der Schweissnaht ermittelt werden kann. Falls auch eine Überprüfung der Rohrenden vor der Verschweissung stattgefunden hat wird auch die Kontur der Rohrenden und ihrer weiteren Eigenschaften erfasst und ev. bereits mittels Steuerung ausgewertet.

Der Sensor erfasst die Daten kontinuierlich bzw. als Film oder auch einzelne Aufnahmen entlang des Umfangs sind möglich. Dazu rotiert der Sensor um den Rohrumfang bzw. um die Schweissnaht, wodurch die komplette Naht erfasst und überprüft wird ohne die Rohre in ihrer Lage zu verändern.

Damit die ermittelten Aufnahmen scharfe und deutliche Konturen ergeben, wird die Schweissnaht beleuchtet, durch ein Gegenlicht auf den tangential bzw. indirekt tangential gerichteten Sensor, welches die Konturen der Schweissnaht bzw. der Schweissraupe bzw. der Rohrenden deutlich hervorhebt und gut erkennbar macht.

Diese durch den Sensor ermittelten Daten werden dann mit den in der Steuerung hinterlegten Daten, die auf Normen und/oder Richtlinien beruhen, die angeben welche Dimension und Form eine Schweissnaht für bestimmte Anforderungen mit den verschweissten Kunststoffrohren aufweisen muss damit sie den Anforderungen stand hält, abgeglichen und geprüft. Aufgrund dieser Auswertung kann dann ausgesagt werden ob die Schweissnaht den Anforderungen entspricht. Zudem kann durch den Sensor, welcher tangential oder indirekt tangential auf den Rohrumfang bzw. die Schweissnaht gerichtet ist und mit Auflicht beleuchtet wird auch ermittelt werden ob Irritationen oder Verunreinigungen auf der Oberfläche der Schweissnaht bzw. Schweissraupe vorliegen, welche ev. auch zu einer Schwächung der Schweissung führen können. All diese Auswertungen können mittels der Steuerung aufgrund der festgelegten Randbedingungen für die Schweissnaht erfolgen, welche in der Regel durch Normen definiert werden. Oder dem Benutzer werden die Daten (Mass- und Flächenangaben) bereitgestellt um als Entscheidungshilfe zu dienen.

Auch können die, durch die Vorrichtung erfassten Daten gespeichert werden, um den Schweissprozess bzw. das Schweissergebnis zu dokumentieren und/oder eine nachträgliche Beurteilung der Schweissnaht zu ermöglichen.

Die Ausführungsbeispiele der Erfindung werden anhand der Figuren beschrieben, wobei sich die Erfindung nicht nur auf die Ausführungsbeispiele beschränkt. Es zeigen:
- Fig. 1: eine schematische Ansicht einer erfindungsgemässen Vorrichtung,
- Fig. 2: eine schematische Ansicht einer erfindungsgemässen Vorrichtung, wobei nur der Sensorträger ohne Trägervorrichtung dargestellt ist,
- Fig. 3: ein schematischer Längsschnitt durch die Rohrklemme und die verschweissten Rohrenden,
- Fig. 4: eine schematische Darstellung einer nicht erfindungsgemässen Vorrichtung, wobei die Beleuchtung als Auflicht angeordnet ist,
- Fig. 5: eine schematische Darstellung einer erfindungsgemässen Vorrichtung, wobei die Beleuchtung als Gegenlicht angeordnet ist,
- Fig. 6: eine schematische Darstellung einer erfindungsgemässen Vorrichtung, mit Gegenlicht und Spiegel,
- Fig. 7: eine schematische Darstellung einer erfindungsgemässen Vorrichtung, mit Licht-Screen, wobei der Licht-Screen nur bereichsweise leuchtet,
- Fig. 8: eine schematische Darstellung des Bewegungsablaufs des Sensorträgers,
- Fig. 9: eine schematische Anordnung des Sensors, des Rohres und der Beleuchtung mit den erfassten Aufnahmen durch den Sensor und
- Fig.10: die umgewandelte Aufnahme in die reine Kontur zur Ermöglichung des Vergleichs.

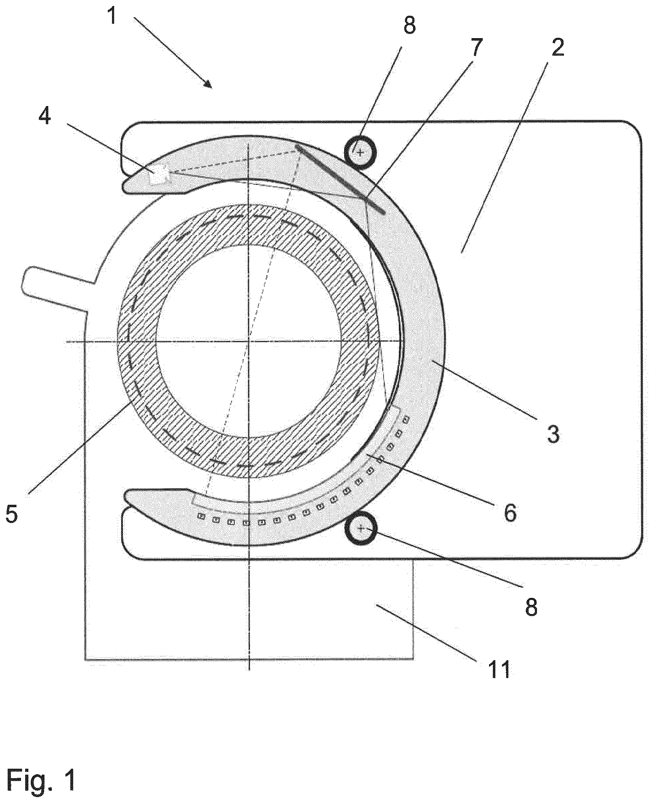

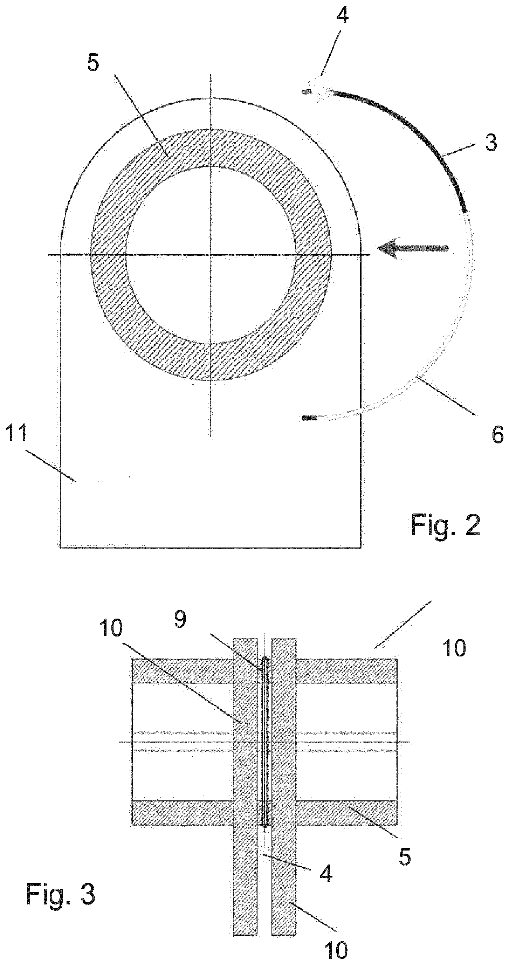

Fig. 1 zeigt eine schematische Darstellung einer erfindungsgemässen Vorrichtung 1, wobei die Vorrichtung 1 zur berührungslosen Überprüfung einer Stumpfschweissung eine Trägervorrichtung 2 enthält. Die in Fig. 1 dargestellte Vorrichtung 1 ist rein schematisch, weshalb die Trägervorrichtung 2 ebenfalls nur als rechteckige Platte 2 dargestellt ist. Selbstverständlich kann die Trägervorrichtung 2 eine andere Form wie auch weitere Features wie bspw. eine Anzeige oder Schalter aufweisen. Zudem sollte sie auch entsprechend der Anwendung der Vorrichtung 1 ausgelegt sein, dass sie zum bsp. so ausgebildet ist, dass sie an eine Stumpfschweissmaschine adaptierbar ist und bspw. durch Einschwenken zwischen die Rohrklemmen 10 in Fig. 3, analog eines Heizspiegels, in der Stumpfschweissmaschine platzierbar ist. Selbstverständlich sind auch andere Adaptierungen an eine Schweissmaschine denkbar. Durch einen modularen Aufbau der erfindungsgemässen Vorrichtung 1 ist sie beliebig einsetzbar und eignet sich auch zur Nachrüstung. Die Vorrichtung 1 kann auch autonom ausgebildet sein und eine eigene Steuerung und Anzeige aufweisen. An der Trägervorrichtung 2 angeordnet ist ein Sensorträger 3. Der Sensorträger 3 ist derart angeordnet, dass er um die zu verschweissenden Rohre bzw. die verschweissten Rohre bzw. die Schweissnaht rotierbar ist, vorzugsweise um 360°, somit um das komplette Rohr herum. Dies wird mit der in Fig. 1 dargestellten Ausführungsform dadurch gelöst, indem der Sensorträger 3 durch die beiden Antriebe 8, welche vorzugsweise synchron laufen, angetrieben wird und beim Drehen des Sensorträgers 3 um dessen Mittelachse bzw. um die Rohrleitungsachse sich mindestens jeweils ein Antrieb 8 im Eingriff mit dem Sensorträger 3 befindet, weshalb die Antriebe 8 sowie der Sensorträger 3 vorzugsweise eine Verzahnung aufweisen (nicht dargestellt), wobei der Sensorträger 3 auch durch andere Arten antreibbar ist.

Der Sensorträger 3 weist vorzugsweise eine C-Form auf. Dieses bringt neben dem Vorteil der guten Rotationsmöglichkeit auch den Vorteil mit sich, dass der Sensorträger 3 einfach über die zu verschweissenden Rohrenden bzw. über die bereits verschweissten Rohre rüber gefahren werden kann, was in Fig. 2 erkennbar ist, und anschliessend konzentrisch zum Rohr 5 angeordnet ist wodurch das Umkreisen des Sensorträgers 3 mit dem darauf angeordneten Sensor 4 einfach realisierbar ist um eine Überprüfung der kompletten Schweissnaht zu ermöglichen. Die C-Form ist derart ausgebildet, dass ein über das Rohrfahren des Sensorträgers 3 auch beim grössten zu überprüfenden Rohrdurchmesser auf der entsprechenden Vorrichtung 1 möglich ist.

Am Sensorträger 3 ist ein elektronischer lichtempfindlicher Sensor 4 angeordnet. Aus dem Stand der Technik sind solche Sensoren 4 als CCD-Sensoren oder auch CMOS-Sensoren bekannt, wobei sich solche Sensoren 4 in Digitalkameras befinden und anstelle eines Sensors 4 der mit einer Optik kombiniert ist, kann auch eine Digitalkamera eingesetzt werden, die einen solchen Sensoren 4 beinhaltet.

Wichtig ist für den Einbau eines solchen Sensors 4 mit einer dazu benötigten Optik bzw. der Digitalkamera, dass der Sensor mit der Optik bzw. die Digitalkamera kompakt gebaut ist. In Fig. 3 sind die Platzverhältnisse für die erfindungsgemässe Vorrichtung 1 erkennbar. Die erfindungsgemässe Vorrichtung 1 muss zwischen die Rohrklemmen 10 einschiebbar sein und dies erfordert einen schmalen Sensor 4 sowie auch die Trägervorrichtung 2 und der Sensorträger 3 sehr dünn auszulegen sind da diese auch noch zwischen die Rohrklemmen 10 hineinragen und die Rohrklemmen 10 durch den Schweissvorgang relativ nahe zusammengefahren sind. Zudem weist die erfindungsgemässe Vorrichtung 1 eine Beleuchtung 6 auf, damit die vom Sensor 4 aufgenommene Schweissnaht bzw. Schweissraupe deutlich erkennbar ist und sich die Kontur klar hervorhebt. In Fig. 1 ist die Beleuchtung 6 als Gegenlicht 6 offenbart, wobei in Fig. 1 das Gegenlicht 6 als Licht-Screen 6 ausgebildet ist. Damit wird erzielt, dass alle Grössen von Rohrdurchmessern die auf der Vorrichtung 1 überprüfbar sind ideal vom Gegenlicht 6 beleuchtet werden. In Fig. 1 stellt die gestrichelte Linie den theoretischen kleinsten Rohrdurchmesser dar, wobei hier das Zentrum der Rohre 5 stellvertretend als kleinsten Durchmesser eingesetzt wurde. Aus Fig. 1 ist somit erkennbar, dass die Erfassung der Schweissnaht mittels Sensor 4 und der entsprechenden Beleuchtung durch das Gegenlichts 6 von einem minimalen Rohrdurchmesser bis zu einem maximalen Rohrdurchmesser, welcher hier dargestellt ist, möglich ist ohne eine Veränderung an der Vorrichtung 1 vornehmen zu müssen, wobei der Sensor 4 bzw. die Digitalkamera 4 und/oder der Spiegel 7 bewegbar bzw. beweglich am Sensorträger 3 angeordnet sein können, um einerseits den Bereich der erfassbaren Rohrdurchmesser zu erweitern und andererseits eine Feineinstellung für eine optimale Aufnahme vornehmen zu können. Des Weiteren ist es von Vorteil, wenn die Vorrichtung 1 einen Spiegel 7 aufweist, da dieser den optischen Weg vom Sensor 4 zur Schweissnaht vergrössert, wie in Fig. 1 ersichtlich.

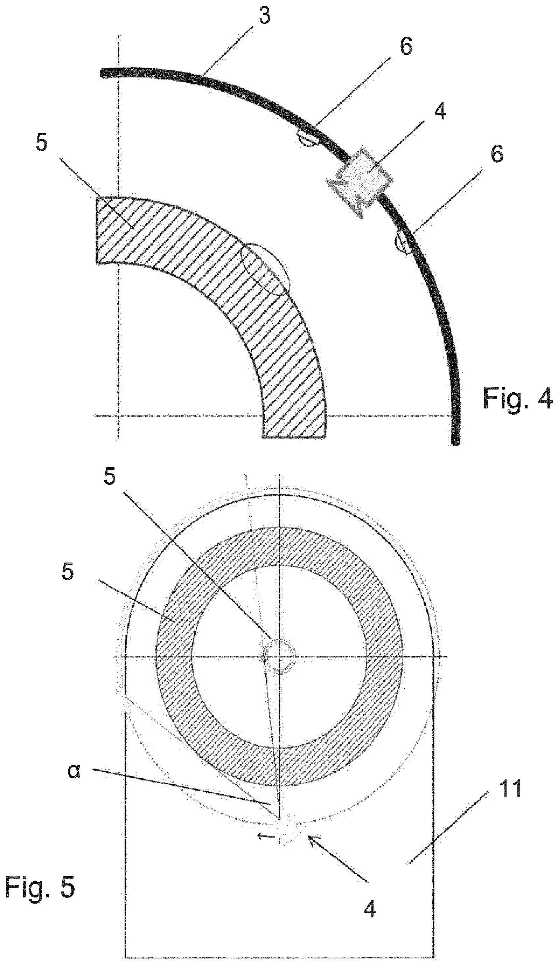

Fig. 4 zeigt die Beleuchtung 6 als Auflicht ausgeführt. Das Auflicht beleuchtet die Schweissnaht an der Stelle der Aufnahme, wobei die Aufnahme der Schweissnaht durch den Sensor 4 bzw. die Digitalkamera vertikal auf die Schweissnaht bzw. den Umfang der Rohre 5 erfolgt. Durch diese Art der Aufnahme werden hauptsächlich Verunreinigungen und Irritationen an der Oberfläche erkannt und/oder das Rohr- bzw. Fittingmaterial identifiziert.

Fig. 5 zeigt die schematische Darstellung bei der Verwendung von Gegenlicht 6. Durch die Verwendung des Gegenlichts 6 zeichnet sich die Kontur der Schweissnaht bzw. Schweissraupe deutlich ab Bei der Verwendung von Gegenlicht 6 muss der Sensor 4 tangential auf den Rohrdurchmesser bzw. auf die Schweissnaht gerichtet sein. In entgegengesetzter Richtung strahlt entsprechend das Gegenlicht 6. Selbstverständlich können sowohl die Ausführung des Gegen- und Auflichts am Sensorträger 3 befestigt sein um die unterschiedlichen Überprüfungen durchzuführen wie auch die Möglichkeit der Einzelanwendung von Gegenlicht oder Auflicht besteht. In Fig. 5 sind jeweils der kleinste und der grösste Rohrdurchmesser abgebildet für die die Vorrichtung 1 anwendbar ist. Der Sensor 4 weist deshalb einen entsprechend grossen Blickwinkel α auf um einen möglichst grossen Bereich der möglichen Rohrdurchmesser abzudecken die mit der Vorrichtung 1 geprüft werden können. Da sich entsprechend der Rohrdurchmesser auch die Position des Gegenlichts 6 ändert und dieses aber auch fest am Sensorträger 3 angeordnet ist, wird das Gegenlicht 6 durch einen Licht-Screen 6 gebildet der sich konzentrisch zum Rohrumfang bzw. entlang der Innenfläche der C-Form des Sensorträgers 3 erstreckt. In Fig. 1 ist ein entsprechender Licht-Screen 6 gut erkennbar. Als mögliche Leuchtkörper können aneinandergereihte LEDs eingesetzt werden, wobei auch andere Leuchtkörper vorstellbar sind.

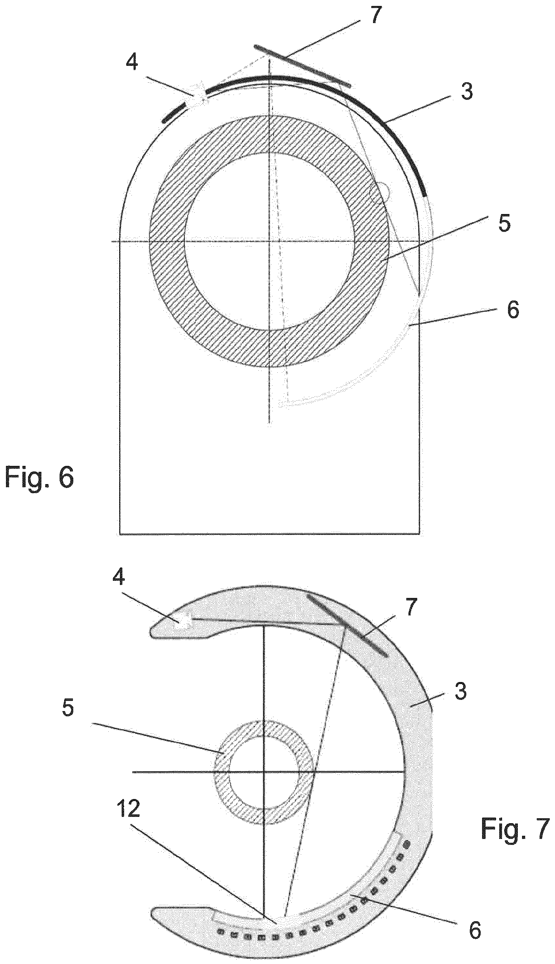

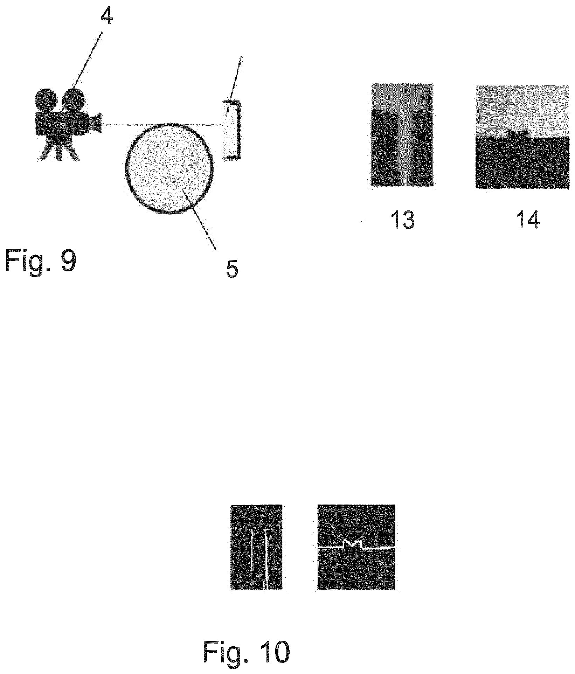

In Fig. 7 ist die bereichsweise An- und Ausschaltung des Licht-Screens 6 dargestellt, wobei die in Fig. 7 abgebildete Ausführungsform der erfindungsgemässen Vorrichtung noch einen Spiegel 7 aufweist und der Sensor 4 die Aufnahme der Schweissnaht indirekt über den Spiegel 7 ausführt. Aber auch hier strahlt das Gegenlicht 6 in die entgegengesetzte Richtung, wobei nur ein leuchtender Bereich 12 des Gegenlichts 6 angeschaltet ist, wodurch eine Reflektion der Beleuchtung vertikal zur Schweissnaht vermieden werden kann und dadurch die Aufnahmen nicht gestört werden und eindeutiger erkennbar sind. Dabei muss immer berücksichtigt werden, dass sich der Sensorträger 3 360° um die Schweissnaht bzw. die Rohrenden dreht, während dem der Sensor 4 die Aufnahmen tätigt. Fig. 6 stellt nochmals den Vorteil eines Spiegels 7 dar. Wie bereits erwähnt erfolgt mit Gegenlicht 6 die Aufnahme durch den Sensor 4 tangential. Damit die komplette Breite der Schweissnaht bzw. der Schweissraupe beleuchtet ist bzw. vom Gegenlicht 6 umgeben ist, ist es Vorteilhaft wenn die Distanz vom Sensor 4 zum Aufnahmepunkt der Schweissnaht relativ gross ist, das vergrössert die wahrgenommene Breite des Gegenlichts 6 und ermöglicht die komplette Abdeckung der Schweissnahtbreite mittels Gegenlicht 6, wodurch sich die Kontur der Schweissnaht bzw. Schweissraupe klar abzeichnet, dies ist auch in den Abbildungen aus Fig. 9 gut erkennbar.

Die Vergrösserung des Abstandes zwischen dem Sensor und der Schweissnaht bewirkt auch, dass der Wegunterschied (optischer Weg) zwischen der grössten und kleinsten Rohrdimension, relativ betrachtet, kleiner wird. Dadurch kann auf eine Verstellung der Schärfentiefe verzichtet werden. Das Bild bleibt bei jeder Dimension scharf bzw. klar erkennbar.

Auch in Fig. 6 sind die Varianten des möglichen minimalen und maximalen Rohrdurchmessers abgebildet, wenn auch der kleinste Durchmesser nur mittels gestrichelter Tangente an den fiktiven kleinsten Durchmesser angegeben ist, wobei auch hier wie auch in Fig. 7 eine Erweiterung des erfassbaren Bereichs durch einen beweglichen Sensor und/oder Spiegel möglich ist.

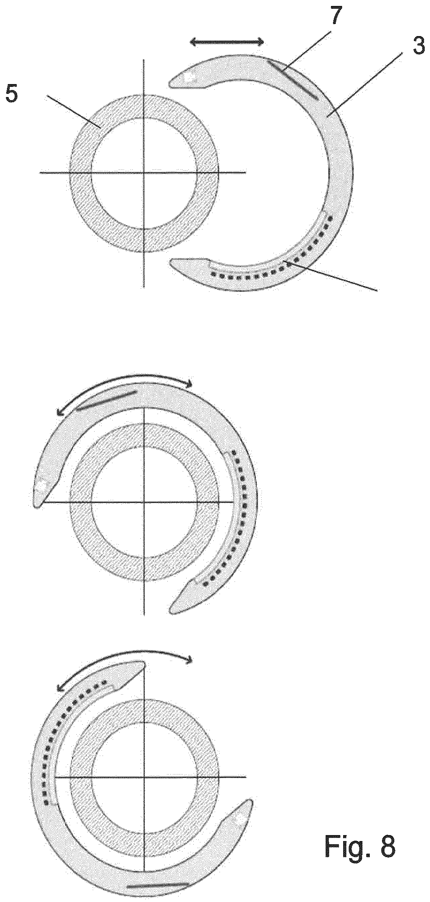

Fig. 8 stellt den Ablauf zur Anordnung um die Rohre und deren Überprüfung des Sensorträges 3 dar. Zu Beginn wird der Sensorträger 3 über die Rohre 5 gefahren, was die C-Form des Sensorträgers 3 ermöglicht. Des Weiteren wird aufgezeigt, dass sich der Sensorträger 3 mit dem daran angeordneten Sensor 4, dem Spiegel 7 und der Beleuchtung 6, welche hier als Gegenlicht 6 ausgebildet ist, um das Rohr 5 rotieren lässt, vorzugsweise um 360° damit die Schweissnaht bzw. die Rohrenden komplett überprüfbar sind.

Fig. 9 stellt eine schematische erfindungsgemässe Überprüfung der Rohrenden vor der Schweissung und eine Überprüfung nach der Schweissung durch die Überprüfung der Schweissnaht dar. Der Sensor 4 ist tangential auf den Rohrdurchmesser der zu verschweissenden Rohrenden 5 bzw. derer Schweissnaht nach der Schweissung gerichtet und wird tangential durch Gegenlicht 6 bestrahlt. Der Sensor 4 erfasst die Aufnahme 13, 14. Die Aufnahme 13 stellt die beiden Rohrenden 5 vor der Verschweissung dar und ermöglicht durch die Aufnahme des Sensors 4, welche kontinuierlich oder als einzelne Aufnahmen erfolgen kann, das Erfassen der Durchmesser, der Ovalität, des gegenseitigen Versatzes, der Oberflächenbeschaffenheit, usw.. Analog kann die Schweissnaht erfasst werden, die in der Aufnahme 14 dargestellt ist. Dabei kann auch durch die Aufnahme die Geometrie der Schweissnaht 9 bzw. der Schweissraupe 9 ermittelt werden, die Form, die Grösse die Fläche sowie ev. Irritationen und Verunreinigungen.

Diese erfassten Daten werden dann durch die Steuerung derart umgewandelt, dass nur noch die Kontur wie in Fig. 10 abgebildet, weiter verarbeitet bzw. zum Datenvergleich eingesetzt wird. Diese ermittelten Konturen können anschliessend durch die in der Steuerung hinterlegten Normen und/oder Vergleichswerte bzw. Randbedingungen verglichen werden und ergeben die Zulässigkeit oder die nicht Zulässigkeit einer Schweissnaht bzw. der Rohrenden, indem aufgrund ihrer ermittelten Eigenschaften und Abmasse beurteilt wird ob die entsprechende Schweissnaht den Anforderungen genügt oder nicht genügt. Die erfassten Daten können auch zu dokumentationszwecken gespeichert werden.

### Bezugszeichenliste

- 1: Vorrichtung zur berührungslosen Überprüfung einer Stumpfschweissung
- 2: Trägervorrichtung
- 3: Sensorträger
- 4: Sensor, elektronischer lichtempfindlicher Sensor, Digitalkamera
- 5: Rohr, Rohrenden bzw. Fitting, Fittingenden
- 6: Beleuchtung / Licht-Screen /Gegenlicht / Auflicht
- 7: Spiegel
- 8: Antrieb
- 9: Schweissnaht
- 10: Rohrklemme bzw. Fittingklemme
- 11: Stumpfschweissnaht
- 12: Leuchtender Bereich des Licht-Screens
- 13: Rohrendenaufnahme durch Sensor vor Verschweissung
- 14: Schweissnahtaufnahme durch Sensor

- α: Blickwinkel Sensor

## Patentansprüche

1. Vorrichtung (1) zur berührungslosen Überprüfung einer Stumpfschweissung von Kunststoffrohren und Fittingen (5) enthaltend eine Trägervorrichtung (2), eine Beleuchtung (6) um die Schweissnaht bzw. die Rohrenden während der Überprüfung bzw. der Aufnahmen mittels Sensor zu beleuchten, einen Sensorträger (3) und mindestens einen Sensor (4) zur Kontrolle der zu verschweissenden Rohrenden bzw. Fittingenden (5) sowie der Schweissnaht (9), wobei der Sensor (4) am Sensorträger (3) angeordnet ist, wobei der Sensorträger (3) beweglich bzw. drehbar an der Trägervorrichtung (2) angeordnet ist, wobei der Sensorträger (3) derart angeordnet ist, dass der Sensorträger (3) um die zu verschweissenden Rohre bzw. die verschweissten Rohre bzw. die Schweissnaht rotierbar ist, wobei der Sensor (4) ein elektronischer lichtempfindlicher Sensor (4), vorzugsweise eine Digitalkamera (4) ist, wobei der Sensor (4) tangential oder indirekt tangential auf den Rohrumfang bzw. die Schweissnaht gerichtet ist, wobei die Beleuchtung (6) als Gegenlicht angeordnet ist und als ein Licht-Screen ausgebildet ist.

2. Vorrichtung (1) nach Anspruch 1, wobei der Sensorträger (3) 360° um die zu verschweissende Rohre (5) bzw. Schweissnaht (9) drehbar ist.

3. Vorrichtung (1) nach einem der Ansprüche 1 oder 2, wobei der Sensorträger (3) eine C-Form aufweist.

4. Vorrichtung (1) nach einem der vorangehenden Ansprüche, wobei die Beleuchtung (6) am Sensorträger (3) angeordnet ist.

5. Vorrichtung (1) nach einem der vorangehenden Ansprüche, wobei die Vorrichtung einen Spiegel (7) aufweist, wobei der Spiegel (7) vorzugsweise am Sensorträger (3) angeordnet ist.

6. Vorrichtung (1) nach einem der vorangehenden Ansprüche, wobei die Vorrichtung an einer Stumpfschweissmaschine (11) angeordnet oder als ein autonomes Modul ausgebildet ist, wobei das Modul auch zur Nachrüstung an eine Stumpfschweissmaschine (11) adaptierbar ist.

7. Verfahren zur berührungslosen Überprüfung einer Stumpfschweissung von Kunststoffrohren und Fittingen (5) mit folgenden Schritten:
- einspannen bzw. fixieren der zu verschweissenden Rohrenden (5) mit sich gegenüberliegenden Stirnseiten
- hobeln der Rohrenden
- vorzugsweise durchführen einer berührungslosen Überprüfung der Rohrenden (5)
- verschweissen der Rohrenden (5) mittels eines bekannten Stumpfschweissverfahrens
- durchführen einer berührungslosen Überprüfung der Schweissnaht (9) während des Abkühlvorgangs,
wobei die berührungslose Überprüfung mittels eines elektronischen lichtempfindlichen Sensors (4), vorzugweise einer Digitalkamera (4) durchgeführt wird, wobei der Sensor (4) tangential oder indirekt tangential auf den Rohrumfang bzw. die Schweissnaht gerichtet und zur berührungslosen Überprüfung um die Rohrenden (5) bzw. Schweissnaht (9) rotiert wird, vorzugsweise um 360°.

8. Verfahren nach Anspruch 7, wobei das Rohr (5) bzw. die Schweissnaht (9) beleuchtet wird, vorzugsweise mittels Gegenlicht.

## Claims

1. A device (1) for the contactless inspection of a butt weld of plastic pipes and fittings (5), containing a carrier device (2), an illumination unit (6) for illuminating the weld seam and/or pipe ends during the inspection and/or recording by means of sensors, a sensor support (3) and at least one sensor (4) for the monitoring pipe ends or fitting ends (5) that are to be welded as well as the weld seam (9), wherein the sensor (4) is arranged on the sensor support (3), wherein the sensor support (3) is moveably and/or rotatably arranged on the carrier device (2), wherein the sensor support (3) is arranged such that the sensor support (3) is rotatable around the pipes that are to be welded or have been welded and/or around the weld seam, wherein the sensor (4) is an electronic light-sensitive sensor (4), preferably a digital camera (4), wherein the sensor (4) is oriented tangentially or indirectly tangentially to the pipe circumference and/or the weld seam, wherein the illumination unit (6) is arranged as a backlight and configured as light-screen.

2. Device (1) according to Claim 1, wherein the sensor carrier (3) is rotatable by 360° around the pipes (5) to be welded and/or the weld seam (9).

3. Device (1) according to one of Claims 1 and 2, wherein the sensor support (3) is C-shaped.

4. Device (1) according to one of the preceding claims, wherein the illumination unit (6) is arranged on the sensor support (3).

5. Device (1) according to one of the preceding claims, wherein the device has a reflector (7), wherein the reflector (7) is preferably arranged on the sensor support (3).

6. Device (1) according to one of the preceding claims, wherein the device (1) is arranged on a butt welding machine (11) or is configured as an autonomous module, wherein the module is adaptable for retrofitting on a butt welding machine (11).

7. Method for the contactless inspection of a butt weld of plastic pipes and fittings (5), comprising the following steps:
- chucking or fixing the pipe ends (5) that are to be welded at opposing end sides;
- planing the pipe ends;
- preferably carrying out a contactless inspection of the pipe ends (5);
- butt welding the pipe ends (5) by means of a known butt welding process;
- carrying out a contactless inspection of the weld seam (9) during the cooling process,
wherein the contactless inspection is performed by means of an electronic light-sensitive sensor (4), preferably a digital camera (4), wherein the sensor (4) is oriented tangentially or indirectly tangentially to the pipe circumference and/or the weld seam and is rotated around the pipe ends (5) and/or weld seam (9), preferably by 360°, to carry out the contactless inspection.

8. Method according to Claim 7, wherein the pipe (5) and/or the weld seam (9) is illuminated, preferably by backlight.

## Revendications

1. Dispositif (1) de vérification sans contact d'une soudure bout à bout de tubes en matière synthétique (5) et de raccords, le dispositif comprenant un dispositif de support (2), un moyen d'éclairage (6) destiné à éclairer le cordon de soudure ou les extrémités de tube pendant la vérification ou la détection au moyen d'un capteur, un support de capteur (3) et au moins un capteur (4) destinés à contrôler les extrémités de tube ou les extrémités de raccord (5) à souder ainsi que le cordon de soudure (9), le capteur (4) étant disposé au niveau du support de capteur (3), le support de capteur (3) étant disposé de manière mobile ou rotative au niveau du dispositif de support (2), le support de capteur (3) étant disposé de telle sorte que le support de capteur (3) puisse tourner autour des tubes à souder ou des tubes soudés ou du cordon de soudure, le capteur (4) étant un capteur photosensible électronique (4), de préférence une caméra numérique (4), le capteur (4) étant dirigé tangentiellement ou de manière indirectement tangentielle à la périphérie de tube ou au cordon de soudure, le moyen d'éclairage (6) étant disposé en contre-jour et conçu sous la forme d'un écran lumineux.

2. Dispositif (1) selon la revendication 1, le support de capteur (3) pouvant tourner sur 360° autour des tubes à souder (5) ou du cordon de soudure (9).

3. Dispositif (1) selon l'une des revendications 1 ou 2, le support de capteur (3) ayant une forme de C.

4. Dispositif (1) selon l'une des revendications précédentes, le moyen d'éclairage (6) étant disposé au niveau du support de capteur (3).

5. Dispositif (1) selon l'une des revendications précédentes, le dispositif comprenant un miroir (7), le miroir (7) étant de préférence disposé au niveau du support de capteur (3).

6. Dispositif (1) selon l'une des revendications précédentes, le dispositif (1) étant disposé au niveau d'une machine à souder bout à bout (11) ou étant conçu comme un module autonome, le module étant également adaptable à une machine à souder bout à bout (11).

7. Procédé de vérification sans contact d'une soudure bout à bout de tubes en matière synthétique et de raccords (5), le procédé comprenant les étapes suivantes :
- serrer ou fixer les extrémités de tube à souder (5) avec des côtés frontaux opposés,
- aplanir les extrémités de tube,
- effectuer de préférence une vérification sans contact des extrémités de tube (5),
- souder les extrémités de tube (5) par un procédé de soudage bout à bout connu,
- effectuer une vérification sans contact du cordon de soudure (9) pendant le processus de refroidissement,
la vérification sans contact étant effectuée à l'aide d'un capteur photosensible électronique (4), de préférence d'une caméra numérique (4), le capteur (4) étant dirigé tangentiellement ou de manière indirectement tangentielle à la périphérie de tube ou au cordon de soudure et étant tourné, de préférence à 360°, autour des extrémités de tuyau (5) ou du cordon de soudure (9) pour effectuer une vérification sans contact.

8. Procédé selon la revendication 7, le tube (5) ou le cordon de soudure (9) étant éclairé, de préférence en contre-jour.
